# EUROPÄISCHE PATENTSCHRIFT

(11) **EP 1 861 655 B1**
(45) Veröffentlichungstag und Bekanntmachung des Hinweises auf die Patenterteilung: **06.12.2017**
(21) Anmeldenummer: 06707537.4
(22) Anmeldetag: 14.03.2006
(51) Int. Cl.: F22B 33/18, F23L 7/00, F22B 31/00

(54) **KRAFTWERKSANLAGE**
POWER PLANT
CENTRALE ELECTRIQUE

(30) Priorität: 21.03.2005 DE 102005012902
(43) Veröffentlichungstag der Anmeldung: 05.12.2007
(73) Patentinhaber: STEAG New Energies GmbH, 66115 Saarbrücken (DE)
(72) Erfinder: DENGEL, Andreas, 66539 Neunkirchen (DE); DÖRR, Heinz-Kurt, 66386 St. Ingbert-Hassel (DE)
(74) Vertreter: Wolff, Matthias
(86) Internationale Anmeldenummer: PCT/EP2006/002288
(87) Internationale Veröffentlichungsnummer: WO 2006/099962

(56) Entgegenhaltungen:
- GB-A- 1 212 905
- JP-A- 11 072 028
- JP-A- 60 223 905
- US-A- 4 003 204
- US-A- 4 074 708

## Beschreibung

Die Erfindung betrifft eine Kraftwerksanlage mit einer einen Teil der durch die Kraftwerksanlage erzeugten Elektroenergie verbrauchenden Elektrolyseeinrichtung, welche Wasserstoff und Sauerstoff erzeugt, wobei die Kraftwerksanlage Einrichtungen zur Verwertung des anfallenden Sauerstoffs aufweist.

In dem deutschen Schutzrecht 10 2005 001 009.1 des Anmelders ist eine solche Kraftwerksanlage beschrieben. Durch Elektrolyseeinrichtungen gebildete Lasten sind im Rahmen der sog. Primärregelung ab- oder zuschaltbar, um die Netzfrequenz konstant zu halten. Die obengenannte Patentanmeldung verweist auf verschiedene Möglichkeiten zur Verwendung des bei der Elektrolyse erzeugten Wasserstoffs, insbesondere dessen Nutzung als Energieträger.

Kraftwerksanlagen der eingangs erwähnten Art gehen aus der GB-A-1212905, JP 11 072028 A, JP 60 223905 A, US-A-4003204 und US-A-4074708 hervor. Beschrieben wird hauptsächlich die Verbrennung von elektrolytisch erzeugtem Wasserstoff und Sauerstoff gemeinsam in einer Verbrennungsanlage, um mittels einer Wärmekraftmaschine und einem Generator weitere Elektroenergie zu erzeugen.

Der Erfindung liegt die Aufgabe zugrunde, die in einer Kraftwerksanlage der eingangs genannten Art anfallenden Elektrolyseprodukte in erweitertem Maße nutzbar zu machen.

Die diese Aufgabe lösende Kraftwerksanlage nach der Erfindung ist dadurch gekennzeichnet, dass die Einrichtungen zur Verwertung des anfallenden Sauerstoffs Leitungseinrichtungen zur Leitung des Sauerstoffs in einem mit Sauerstoff unterversorgten Bereich des Verbrennungsraums eines durch einen Kohlenstaub-Luftgemisch befeuerten Dampferzeugers umfassen, in welchem eine Flammenfront eine Wand des Verbrennungsraum erreicht.

Während die Nutzung des anfallenden Sauerstoffs lediglich in einer Sammlung und Abfüllung sowie dem Vertrieb von Sauerstoffgas als solchem bestehen könnte, dient gemäß der Erfindung der erzeugte Sauerstoff dem Betrieb der Kraftwerksanlage selbst. In diesem, in besonderem Maße mit Sauerstoff unterversorgten Bereich des Verbrennungsraums verhindert die ergänzende Versorgung mit Sauerstoff (oder stark sauerstoffangereicherter Luft) unerwünschte chemische Reaktionen zwischen Gasen im Verbrennungsraum und dem Wandmaterial des Dampferzeugers. Solche Reaktionen beeinträchtigen in erheblichem Maße die Materialeigenschaften und führen an den betreffenden Stellen schließlich zur Zerstörung der Wand des Dampferzeugers. Kostspielige Reparaturen und Stillstandszeiten sind die Folge. Indem durch die zusätzliche Sauerstoffzufuhr schädliche Reaktionen zwischen Verbrennungsgasen und Wandmaterial weitgehend unterbunden werden, lässt sich der Aufwand für Reparaturen des Dampferzeugers verringern und letztlich dessen Lebensdauer vergrößern.

Ferner können auch Einrichtungen zur Leitung des Sauerstoffs in eine Rauchgasentschwefelungsanlage vorgesehen sein. Durch Sauerstoff, der neben der Verbrennungsluft gezielt in bestimmte Bereiche des Verbrennungsraums eingeleitet wird, lässt sich die Versorgung des Verbrennungsraums mit Oxidationsmittel optimieren.

Die Verwendung von reinem Sauerstoff zur Oxidation von Calziumsulfit zu Calziumsulfat in der Rauchgasentschwefelungsanlage erlaubt gegenüber der Verwendung von Luft kleinere Reaktionsräume und dementsprechend geringeren Bauaufwand für die Rauchgasentschwefelungsanlage.

Solche Bereiche liegen im Verbrennungsraum, z. B. einer Tangential- oder Boxerfeuerung nahe bei den Einlässen, für Brennstoff und Verbrennungsluft, z. B. nahe oberhalb der Einlässe.

Die Einleitung des Sauerstoffs in den genannten Bereich kann über eine Ringleitung oder mehrere Ringleitungen erfolgen, wobei um den Umfang der Ringleitung verteilt Einlässe vorgesehen sind.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine schematische Darstellung einer Kraftwerksanlage nach der Erfindung,
- Fig. 2: eine schematische Teildarstellung eines in der Kraftwerksanlage von Fig. 1 verwendeten Dampferzeugers, und
- Fig. 3: eine schematische Darstellung einer Rauchgasentschwefelungsanlage der Kraftwerksanlage von Fig. 1.

Eine Kraftwerksanlage weist einen Dampferzeuger 1, eine Turbine 2 und einen Generator 3 auf. Der Generator 3 gibt Elektroenergie an ein Elektrizitätsnetz 4 ab. Einen Teil der durch die Kraftwerksanlage erzeugten Elektroenergie verbraucht eine Elektrolyseeinrichtung 5, welche Wasserstoff und Sauerstoff erzeugt und eine zur Konstanthaltung der Netzfrequenz variierbare Last bildet, wie dies in der deutschen Patentanmeldung 10 2005 001 009.1 beschrieben ist.

Eine Leitung 6 dient der Ableitung in der Elektrolyseeinrichtung 5 erzeugten Wasserstoffs. Über eine Leitung 7 mit einer Pumpe 8 wird Sauerstoff abgeleitet und in einen Pufferbehälter 9 überführt.

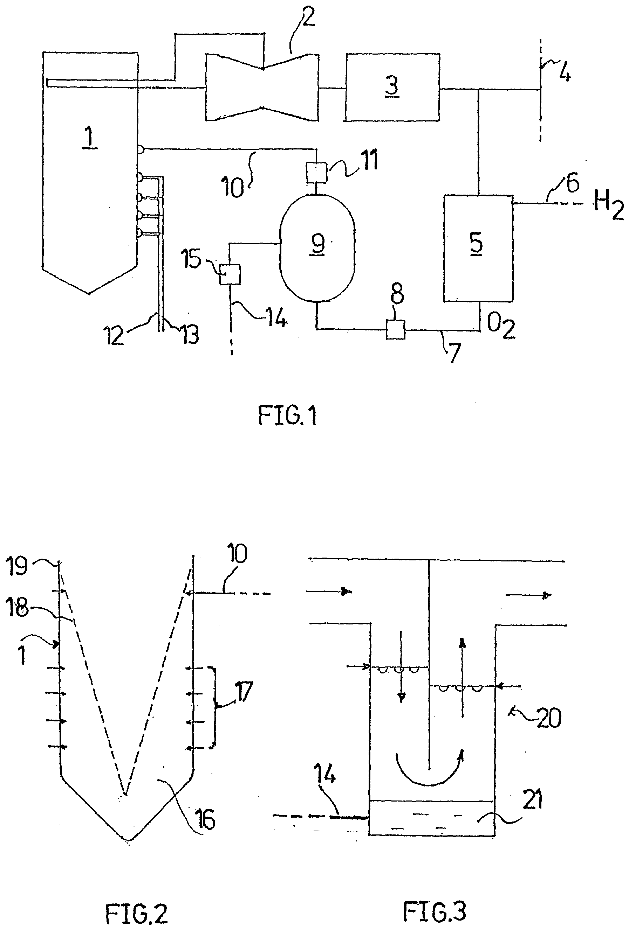

Über eine Leitung 10 und eine Pumpe 11 lässt sich Sauerstoff aus dem Pufferbehälter 9 in den Verbrennungsraum des Dampferzeugers 1 überführen. Unterhalb der Einlässe für den Sauerstoff werden in dem betreffenden Ausführungsbeispiel auf vier Höhenniveaus Brennstoff und Verbrennungsluft durch entsprechend einer Tangentialfeuerung angeordnete Einlässe hindurch in den Dampferzeuger 1 eingeführt, wobei die Verbrennungsluft über eine Leitung 12 und der Brennstoff, ein Kohlestaub-Luftgemisch, über eine Leitung 13 herantransportiert werden. Der Pufferbehälter 9 steht ferner über eine Leitung 14 und eine Pumpe 15 in Verbindung mit einer in Fig. 3 gezeigten Rauchgasentschwefelungsanlage 20.

Wie aus Fig. 2 hervorgeht, wird der Sauerstoff in den Verbrennungsraum 16 des Dampferzeugers 1 in einer Höhe eingeführt, in welcher eine Flammenfront 18 die Wand 19 des Dampferzeugers erreicht. Eine in diesem Bereich bestehende Unterversorgung mit Sauerstoff wird durch die Zuführung des Sauerstoffs vorteilhaft ausgeglichen. Chemische Reaktionen zwischen Gasen im Verbrennungsraum 16 und dem Material der Wand 19 unterbleiben.

Zur Einleitung des Sauerstoffs in den Verbrennungsraum 16 kann eine Ringleitung vorgesehen sein, wobei über den Umfang der Ringleitung verteilt in den Verbrennungsraum führende Stichleitungen gebildet sind. Zweckmäßig wird ein die Innenwand des Verbrennungsraums möglichst gleichmäßig bedeckender Sauerstoffschleier erzeugt.

Im Sumpf 21 einer in Fig. 3 gezeigten Rauchgasentschwefelungseinrichtung 20 abgeschiedenes Calziumsulfit (CaSO₃) wird durch Sauerstoff, der über die Leitung 14 dem Sumpf zugeführt wird, oxidiert und in Calziumsulfat (CaSO₄) verwandelt.

## Patentansprüche

1. Kraftwerksanlage mit einer einen Teil der durch die Kraftwerksanlage erzeugten Elektroenergie verbrauchenden Elektrolyseeinrichtung (5), welche Wasserstoff und Sauerstoff erzeugt, wobei die Kraftwerksanlage Einrichtungen (8-11;14,15) zur Verwertung des anfallenden Sauerstoffs aufweist.
**dadurch gekennzeichnet,**
**dass** die Einrichtungen (8-11;14,15) zur Verwertung des anfallenden Sauerstoffs Leitungseinrichtungen (8-11) zur Leitung des Sauerstoffs in einen mit Sauerstoff unterversorgten Bereich des Verbrennungsraums (16) eines durch ein Kohlestaub-Luftgemisch befeuerten Dampferzeugers (1) umfassen, in welchem eine Flammenfront (18) während des Betriebs der Kraftwerksanlage eine Wand (19) des Verbrennungsraums (19) erreicht.

2. Kraftwerksanlage nach Anspruch 1,
**dadurch gekennzeichnet,**
**dass** die Einrichtungen (8-11; 14,15) ferner zur Leitung des Sauerstoffs in eine Rauchgasentschwefelungsanlage (20) vorgesehen sind.

3. Kraftwerksanlage nach Anspruch 1 oder 2,
**dadurch gekennzeichnet,**
**dass** die Leitungseinrichtungen (8-11) zur Einleitung des Sauerstoffs in den Verbrennungsraum (16) nahe eines Einlassbereichs für Brennstoff und Verbrennungsluft vorgesehen sind.

4. Kraftwerksanlage nach einem der Ansprüche 1 bis 3,
**dadurch gekennzeichnet,**
**dass** zur Einleitung des Sauerstoffs eine den Dampferzeuger umgebende Ringleitung oder mehrere solcher Ringleitungen mit über den Ringumfang verteilten, in den Verbrennungsraum führende Stichleitungen vorgesehen ist/sind.

## Claims

1. Power plant with an electrolysis device (5), which produces hydrogen and oxygen while consuming part of the electrical energy generated by the power plant, wherein the power plant has devices (8-11; 14, 15) for recycling the produced oxygen,
**characterized**
**in that** the devices (8-11; 14, 15) for recycling the produced oxygen comprise conducting devices (8, 11) for conducting the oxygen into a region of the combustion chamber (16) of a steam generator (1) fired by a carbon-dust/air mixture which is undersupplied with oxygen and in which a flame front (18) reaches a wall (19) of the combustion chamber (16) during the operation of the power plant.

2. Power plant according to Claim 1,
**characterized**
**in that** the devices (8-11; 14, 15) are also intended for conducting the oxygen into a flue-gas desulfurization plant (20).

3. Power plant according to Claim 1 or 2,
**characterized**
**in that** the conducting devices (8-11) are intended for introducing the oxygen into the combustion chamber (16) near an inlet region for fuel and combustion air.

4. Power plant according to one of Claims 1 to 3, **characterized in that** a closed circular pipeline or a number of such closed circular pipelines that surround the steam generator and have branch lines which are distributed over the circular periphery and lead into the combustion chamber is/are provided for introducing the oxygen.

## Revendications

1. Centrale électrique présentant un dispositif d'électrolyse (5), consommant une partie de l'énergie électrique produite par la centrale électrique, qui génère de l'hydrogène et de l'oxygène, la centrale électrique présentant des dispositifs (8-11;14,15) pour l'utilisation de l'oxygène produit, **caractérisée**
**en ce que** les dispositifs (8-11 ;14,15) pour l'utilisation de l'oxygène produit comprennent des dispositifs de guidage (8-11) pour guider l'oxygène dans une zone sous-alimentée en oxygène de la chambre de combustion (16) d'un générateur de vapeur (1) alimenté en mélange poussière de charbon-air, dans lequel un front de flammes (18) atteint une paroi (19) de la chambre de combustion (16) pendant le fonctionnement de la centrale électrique.

2. Centrale électrique selon la revendication 1, **caractérisée**
**en ce que** les dispositifs (8-11;14,15) sont en outre prévus pour le guidage de l'oxygène dans une installation (20) de désulfuration des gaz de fumée.

3. Centrale électrique selon la revendication 1 ou 2, **caractérisée**
**en ce que** les dispositifs de guidage (8-11) sont prévus pour l'introduction de l'oxygène dans la chambre de combustion (16) à proximité d'une zone d'entrée pour le combustible et l'air de combustion.

4. Centrale électrique selon l'une quelconque des revendications 1 à 3, **caractérisée**
**en ce qu'**une conduite circulaire entourant le générateur de vapeur, ou plusieurs de ces conduites circulaires, destinée(s) à l'introduction de l'oxygène, présentant des conduites de dérivation réparties sur la périphérie circulaire, débouchant dans l'espace de combustion, est/sont prévue(s).
